# DEMANDE DE BREVET EUROPEEN

(11) **EP 0 970 975 A1**
(43) Date de publication de la demande: **12.01.2000**
(21) Numéro de dépôt: 99202082.6
(22) Date de dépôt: 26.06.1999
(51) Int. Cl.: C08F 8/50, C08K 5/14

(54) **Corps creux biorientés à base de terpolymères statistiques du propylène et procédé pour la fabrication de ces corps creux**

(30) Priorité: 10.07.1998 BE 9800526
(71) Demandeur: SOLVAY (Société Anonyme), 1050 Bruxelles (BE)
(72) Inventeur: Charlier, Jean, 1341 Ceroux-Mousty (BE); Delaite, Emmanuel, 7090 Braine-Le-Comte (BE)
(74) Mandataire: Troch, Geneviève

(57) **Abrégé**

Les corps creux biorientés sont obtenus par mise en oeuvre de terpolymères statistiques du propylène contenant de l'éthylène (0,5 à 5 % en poids) et du 1-butène (2 à 12 % en poids) , ayant une température de fusion de 120 à 150°C, dégradés par un générateur de radicaux libres et dont le facteur de dégradation A est de 1,5 à 10, ledit facteur étant représenté par MFI_{g}/MFIᵢ dans lequel MFI_{g} est l'indice de fluidité en fondu du terpolymère dégradé (compris entre 3 et 30 g/10 min) et MFIᵢ est l'indice de fluidité en fondu du terpolymère initial (compris entre 2 et 15 g/10 min).

Procédé pour la fabrication de corps creux biorientés par injection étirage-soufflage de terpolymères statistiques du propylène dégradés selon l'invention.

Utilisation des corps creux biorientés pour l'emballage.

## Description

La présente invention concerne des corps creux à base de terpolymères statistiques du propylène. Elle concerne plus particulièrement des corps creux biorientés pourvus de bonnes propriétés optiques et mécaniques obtenus à partir de terpolymères statistiques dépolymérisés du propylène.

La présente invention concerne également un procédé pour la fabrication de ces corps creux et plus particulièrement la fabrication de corps creux biorientés par injection étirage-soufflage de préformes, encore appelées ébauches.

La demande sans cesse croissante de corps creux de qualité élevée en matière plastique possédant la transparence du verre a conduit à des recherches intensives spécialement dans le secteur du polypropylene (PP). Toutefois, la mise en oeuvre d'un tel matériau entraîne des problèmes de contrôle de fabrication. Des fabricants d'équipements comme BEKUM et NISSEI ASB ont mis au point des appareils qui surmontent les difficultés rencontrées avec les machines construites antérieurement (problèmes de contrôle du cycle de fabrication) et qui autorisent la production de corps creux biorientés de haute qualité en PP (BOPP) par un cycle d'injection étirage-soufflage. Les résines de PP utilisées pour cette application sont, d'une part, les homopolymères qui sont rigides mais translucides, et d'autre part, des copolymères statistiques avec de l'éthylène qui présentent une large gamme de températures de fusion et de bonnes propriétés optiques mais une rigidité inférieure. Il existe donc toujours une demande sur le marché pour des corps creux à base de résines de polypropylène présentant un compromis optimal entre les propriétés mécaniques et optiques et la processabilité.

La demande DE-A-2827764 décrit un procédé de préparation d'un terpolymère statistique du propylène spécialement destiné à la fabrication de feuilles soudables à chaud, par copolymérisation du propylène avec l'éthylène et un alcène-1 supérieur, puis dégradation (dépolymérisation) du polymère obtenu par extrusion à l'état fondu, en l'absence d'oxygène et de générateurs de radicaux libres.

Le brevet US-A-5436041 revendique une feuille multicouche transparente imprimable biorientée dont les deux faces sont scellables; la couche centrale est constituée d'un PP dépolymérisé par les peroxydes (facteur de dégradation préféré: de 4 à 8) et une des faces peut être constituée d'un terpolymère statistique C₃-C₂-C₄ pouvant être dépolymérisé par les peroxydes (facteur de dégradation préféré : de 6 à 10).

On a maintenant trouvé un terpolymère statistique du propylène dégradé (dépolymérisé) par les générateurs de radicaux libres convenant tout particulièrement pour la production de corps creux biorientés transparents.

A cet effet, la présente invention concerne des corps creux biorientés obtenus par mise en oeuvre d'un terpolymère statistique du propylène contenant de 83 à 97,5 % en poids d'unités monomériques dérivées du propylène, de 0,5 à 5 % en poids d'unités monomériques dérivées de l'éthylène et de 2 à 12 % en poids d'unités monomériques dérivées du 1-butène, ayant une température de fusion de 120 à 150°C (mesurée selon la norme ASTM D 3418), dégradé par un générateur de radicaux libres, le facteur de dégradation A étant de 1,5 à 10, ledit facteur A étant défini comme étant le rapport MFI_{g}/MFIᵢ dans lequel MFI_{g} est l'indice de fluidité en fondu du terpolymère dégradé et est compris entre 3 et 30 g/10 min et MFIᵢ est l'indice de fluidité en fondu du terpolymère initial et est compris entre 2 et 15 g/10 min.

L'indice de fluidité en fondu (MFI) est mesuré à 230°C sous une charge de 2,16 kg et exprimé en g/10 min (norme ASTM D 1238).

Des terpolymères statistiques du propylène convenant particulièrement bien pour la réalisation de corps creux biorientés en terpolymères statistiques du propylène dégradés contiennent de 1,5 à 3 % en poids d'unités monomériques dérivées de l'éthylène et de 5 à 8 % en poids d'unités monomériques dérivées du 1-butène, le solde étant constitué d'unités monomériques dérivées du propylène.

Par ailleurs, la préférence est donnée aux terpolymères statistiques dont l'indice de fluidité en fondu initial MFIᵢ s'élève de 2,5 à 7 g/10 min, et plus particulièrement encore de 4,5 à 5,5 g/ 10 min, et dont l'indice de fluidité en fondu après dégradation MFI_{g} s'élève de 5 à 20 g/10 min, et plus particulièrement encore de 7 à 15 g/10 min. Le plus souvent, le facteur de dégradation A ne dépasse pas 5.

Les terpolymères statistiques du propylène mis en oeuvre selon la présente invention sont dégradés par mélange en fondu avec un générateur de radicaux libres en quantité appropriée.

Le générateur de radicaux libres est le plus souvent choisi parmi les peroxydes organiques, les persulfates et les composés diazo (et leurs mélanges). On donne la préférence aux peroxydes organiques. A titre d'exemples non limitatifs de peroxydes pouvant âtre mis en oeuvre, seuls ou en mélange, on peut mentionner les peroxydes de diaryles, d'alkylaryles et de dialkyles tels que le peroxyde de dicumyle, le peroxyde de t-butylcumyle et le 2,5-diméthyl-2,5-di(t-butylperoxy)hexane (DHBP) ou encore les peresters tels que l'éthyl 3,3-bis(t-butylperoxy)butyrate et l'éthyl 3,3-bis(t-amylperoxy)butyrate. Les peroxydes qui conviennent le mieux sont ceux qui se décomposent aux températures auxquelles est effectué le mélange en fondu. Le 2,5-diméthyl-2,5-di(t-butylperoxy)hexane (DHBP) a donné d'excellents résultats.

La quantité de générateur de radicaux libres mise en oeuvre pour dégrader (et donc dépolymériser) les terpolymères statistiques du propylène est généralement au moins égale à 0,05 g/kg de terpolymère et ne dépasse généralement pas 0,6 g/kg de terpolymère statistique du propylène. Avantageusement, la quantité de générateur de radicaux libres est égale ou supérieure à 0,1g/kg et ne dépasse pas 0,5g/kg de terpolymère statistique.

Le plus souvent, le mélange en fondu du terpolymère et du générateur de radicaux libres est réalisé dans des conditions de température et de durée telles qu'elles induisent la fusion au moins partielle du terpolymère statistique de propylène. De préférence, elles sont telles qu'il y ait fusion complète du terpolymère.

Généralement, le mélange est effectué à une température ne dépassant pas 350°C; le plus souvent cette température ne dépasse pas 300°C; de préférence elle ne dépasse pas 250°C. La température minimale à laquelle le mélange en fondu est effectué est généralement supérieure ou égale à 100°C, le plus souvent cette température est supérieure ou égale à 130°C; de préférence elle est supérieure ou égale à 140°C. On obtient de bons résultats lorsque cette température est supérieure ou égale à 200°C et ne dépasse pas 240°C.

La durée de mélange est choisie en fonction de la nature du générateur de radicaux libres et de la température de mélange. La durée optimale pourra être évaluée avantageusement par des essais préalables.

Le mélange du terpolymère statistique du propylène avec le générateur de radicaux libres peut être effectué dans tout dispositif connu à cet effet. Ainsi, on peut utiliser des malaxeurs internes ou externes. Les malaxeurs internes sont les plus appropriés et parmi ceux-ci les malaxeurs discontinus de type BRABENDER et les malaxeurs continus tels que les extrudeuses. Les extrudeuses sont généralement préférées.

Outre, le générateur de radicaux libres, les terpolyrmères statistiques du propylène soumis à la dégradation peuvent contenir d'autres additifs conventionnels tels que des agents antioxydants, des agents antiacides, des agents anti-UV, des agents antistatiques, des colorants ou des matériaux de charge en les quantités usuelles. Ils peuvent également contenir des agents de nucléation qui améliorent la transparence et le brillant de surface des corps creux, ainsi que leur rigidité. A titre d'exemples non limitatifs de pareils agents nucléants, on peut mentionner les dérivés de sorbitol. Le dibenzylidène sorbitol a donné d'excellents résultats.

Les terpolymères statistiques selon la présente invention peuvent être mis en oeuvre seuls ou en mélange à d'autres polymères tels que des polyoléfines et plus particulièrement des homo- ou copolymères cristallins du propylène. Les structures obtenues peuvent être mono- ou multicouches. Les corps creux obtenus par mise en oeuvre du terpolymère seul donnent de bons résultats.

Les terpolymères statistiques du propylène utilisables pour la réalisation de la présente invention peuvent être obtenus par tout procédé connu pour la copolymérisation du propylène avec l'éthylène et le 1-butène, tel que par exemple par un procédé en phase gazeuse, et au moyen de tout système catalytique de type Ziegler-Natta connu suffisamment actifet productif, permettant de polymériser du propylène sous forme suffisamment stéréospécifique, et pouvant incorporer dans le polymère les quantités requises de 1-butène et d'éthylène.

Les systèmes catalytiques préférés pour préparer les terpolymères utilisables selon l'invention comprennent:
- un solide catalytique comprenant à titre de composants essentiels du magnésium, du titane et du chlore,
- un composé organoaluminique, de préférence un trialkylaluminium, tout particulièrement le triéthylaluminium.

Les solides catalytiques utilisables pour préparer les terpolymères sont bien connus de l'homme du métier. Ils contiennent le plus souvent un composé électrodonneur (électrodonneur interne) choisi parmi les mono- et diesters d'acides carboxyliques aromatiques, de préférence parmi les phtalates de dialkyle, tout particulièrement le diisobutylphtalate.

Les systèmes catalytiques contiennent le plus souvent également:
- un composé électrodonneur (électrodonneur externe) choisi parmi les esters d'acides carboxyliques aromatiques et les alkoxysilanes de formule R¹Si(OR²)₄₋ₙ dans laquelle R¹ représente un groupe hydrocarboné contenant de 1 à 12 atomes de carbone, R² représente un groupement hydrocarboné contenant de 1 à 8 atomes de carbone et n est 1, 2, ou 3.

Les esters d'acides carboxyliques aromatiques utilisés de préférence à titre d'électrodonneur externe sont les benzoates d'alkyle et d'alkoxyalkyle, tout particulièrement l'éthyl p-éthoxy benzoate. Des alkoxysilanes préférés à titre d'électrodonneur externe sont les alkylalkoxy- et cycloalkylalkoxysilanes, tout particulièrement le diisobutyldiméthoxysilane, le n-propyltriméthoxysilane, le dicyclopentyldiméthoxysilane et le cyclohexylméthyldiméthoxysilane.

Les divers constituants du système catalytique sont généralement mis en oeuvre de manière que le rapport atomique entre l'aluminium du composé organoaluminique et le titane du solide catalytique soit de 3 à 300. En outre, le rapport molaire entre l'aluminium du composé organoaluminique et le composé électrodonneur est généralement de 0,5 à 60.

Les autres conditions générales de la copolymérisation sont bien connues de l'homme du métier. La température est généralement de 20 à 150°C. La polymérisation est généralement effectuée à une pression supérieure à la pression atmosphérique, de préférence de 10 à 50.10⁵ Pa.

La distribution des poids moléculaires (DPM) du terpolymère dégradé est rétrécie. Le plus souvent, les terpolymères statistiques dégradés présentent une distribution des masses moléculaires telle que Mw/Mn est compris entre 3 et 8 et plus particulièrement entre 4 et 6.

La présente invention concerne également un procédé pour la fabrication de corps creux biorientés en terpolymères statistiques du propylène dégradés par un générateur de radicaux libres tels que spécifiquement décrits ci-dessus.

A cet effet, l'invention concerne un procédé pour la fabrication de corps creux biorientés par injection étirage-soufflage d'un terpolymère statistique du propylène contenant
- de 83 à 97,5 % en poids d'unités monomériques dérivées du propylène,
- de 0,5 à 5 % en poids d'unités monomériques dérivées de l'éthylène et
- de 2 à 12 % en poids d'unités monomériques dérivées du 1-butène, ayant une température de fusion de 120 à 150°C. dégradé par un générateur de radicaux libres, le facteur de dégradation A étant de 1,5 à 10, ledit facteur A étant défini comme étant le rapport MFI_{g}/MFIᵢ dans lequel MFI_{g} est l'indice de fluidité en fondu du produit dégradé et est compris entre 3 et 30 g/10 min et MFIᵢ est l'indice de fluidité en fondu du copolymère initial et est compris entre 2 et 15 g/10 min.

Le procédé de moulage de corps creux biorientés par injection étiragesoufflage, bien connu en soi par l'homme du métier, comprend dans tous les cas une première étape au cours de laquelle est moulée par injection une préforme.

Le corps creux est obtenu par étirage-soufflage de cette préforme. La fabrication du corps creux peut se réaliser en une seule étape (technique encore appelée "cycle chaud") par enchaînement du moulage par injection de la préforme, contrôle de la température de la préforme venant de l'injection à la température d'orientation du terpolymère, suivie de l'étirage longitudinal de la préforme et de son soufflage. De préférence, la fabrication du corps creux s'effectue en deux étapes (technique encore appelée "cycle froid") comprenant le moulage par injection d'une préforme que l'on laisse refroidir et l'étiragesoufflage ultérieur de la préforme préalablement soumise à un conditionnement thermique à la température d'orientation du terpolymère.

Quel que soit le procédé choisi, le point de départ du cycle est le moulage par injection d'une préforme possédant une mémoire thermique contrôlée (controlled thermal history) qui donne aux terpolymères statistiques dépolymérisés une structure cristalline régulière et fine.

Dans le cycle froid, la préforme est réchauffée de manière aussi homogène que possible dans toute son épaisseur; dans le cycle chaud, la préforme est refroidie à une température située juste en dessous de son point de fusion; puis dans les deux cas elle subit un étirage longitudinal et transversal considérable (taux d'étirage d'environ 4 à 15) pour générer de fortes tensions qui désintégrent la structure cristalline; de ce fait les propriétés optiques sont améliorées.

Une attention spéciale doit être accordée au contrôle de la température d'étirage. Elle se situe juste en dessous de la température de fusion.

L'emploi des terpolymères statistiques dégradés (dépolymérisés) du propylène selon la présente invention offre divers avantages: les corps creux et flacons possédent un rapport prix/propriétés favorable, de bonnes propriétés mécaniques et une transparence très élevée. Ils conviennent particulièrement pour l'emballage des détergents, des cosmétiques, des médicaments et des produits alimentaires.

L'exemple qui suit est destiné à illustrer l'invention. Il concerne la préparation d'un corps creux (flacon) en une composition à base d'un terpolymère statistique dégradé du propylène. La composition mise en oeuvre était constituée de :

| Ingrédients en g | |
|---|---|
| terpolymère statistique du propylène (température de fusion: 126°C; indice de fluidité en fondu MFIᵢ : 5 g/10 min) | 1000 |
| produit Irganox® 1010 | 1 |
| stéarate de calcium | 1 |
| produit Ultranox® 626 | 0,5 |
| agent antistatique | 1 |
| dibenzylidène sorbitol (agent nucléant) | 2,4 |
| Peroxyde DHBP | 0,45 |

Cette composition a été granulée et dégradée par extrusion aux environs de 220°C.

Le terpolymère statistique mis en oeuvre dans l'exemple contenait 2,5 % en poids d'unités monomériques dérivées de l'éthylène et 7 % en poids d'unités monomériques dérivées du 1-butène. Son indice de fluidité en fondu MFI_{g} (après dégradation par extrusion de granules en présence de peroxyde DHBP) s'élevait à 10 g/10 min. Son facteur de dégradation A s'élevait dès lors à 2. Ledit terpolymère statistique dégradé présentait par ailleurs une distribution des poids moléculaires Mw/Mn de 5,5.

A partir des granules, on a injecté à 210°C des préformes, lesquelles ont été ultérieurement réchauffées à 120°C, puis étirées-soufflées à cette température sur une machine RBU 225 (construite par BEKUM Maschinenfabriken GmbH, Berlin, Allemagne) pour obtenir des flacons biorientés transparents d'une contenance d'un litre.

## Revendications

1. Corps creux biorientés obtenus par mise en oeuvre d'un terpolymère statistique du propylène contenant
- de 83 à 97,5 % en poids d'unités monomériques dérivées du propylène,
- de 0,5 à 5 % en poids d'unités monomériques dérivées de l'éthylène et
- de 2 à 12 % en poids d'unités monomériques dérivées du 1-butène ayant une température de fusion de 120 à 150°C, dégradé par un générateur de radicaux libres, le facteur de dégradation A étant de 1,5 à 10, ledit facteur A étant défini comme étant le rapport MFI_{g}/MFIᵢ dans lequel MFI_{g} est l'indice de fluidité en fondu du terpolymère dégradé et est compris entre 3 et 30 g/10 min et MFIᵢ est l'indice de fluidité en fondu du terpolymère initial et est compris entre 2 et 15 g/10 min.

2. Corps creux biorientés selon la revendication 1, dans lesquels le terpolymère statistique du propylène mis en oeuvre contient de 1,5 à 3 % en poids d'unités monomériques dérivées de l'éthylène et de 5 à 8 % en poids d'unités monomériques dérivées du 1-butène.

3. Corps creux biorientés selon la revendication 1 ou 2, dans lesquels le terpolymère statistique du propylène mis en oeuvre présente un indice de fluidité en fondu initial MFIᵢ s'élevant de 2,5 à 7 g/10 min et un indice de fluidité en fondu après dégradation MFI_{g} s'élevant de 5 à 20 g/10 min.

4. Corps creux biorientés selon l'une quelconque des revendications 1 à 3, dans lesquels le terpolymère statistique du propylène dégradé présente une distribution des masses moléculaires (Mw/Mn) comprise entre 3 et 8.

5. Procédé pour la fabrication de corps creux biorientés par injection étirage- soufflage d'un terpolymère statistique du propylène contenant
- de 83 à 97,5 % en poids d'unités monomériques dérivées du propylène,
- de 0,5 à 5 % en poids d'unités monomériques dérivées de l'éthylène et
- de 2 à 12 % en poids d'unités monomériques dérivées du 1-butène, ayant une température de fusion de 120 à 150 °C, dégradé par un générateur de radicaux libres, le facteur de dégradation A étant de 1,5 à 10, ledit facteur A étant défini comme étant le rapport MFI_{g} / MFIᵢ dans lequel MFI_{g} est l'indice de fluidité en fondu du produit dégradé et est compris entre 3 et 30 g/10 min et MFIᵢ est l'indice de fluidité en fondu du copolymère initial et est compris entre 2 et 15 g/10 min.

6. Procédé pour la fabrication de corps creux biorientés par étiragesoufflage d'une préforme injectée en terpolymère statistique du propylène contenant
- de 83 à 97,5 % en poids d'unités monomériques dérivées du propylène,
- de 0,5 à 5 % en poids d'unités monomériques dérivées de l'éthylène et
- de 2 à 12 % en poids d'unités monomériques dérivées du 1-butène, ayant une température de fusion de 120 à 150°C, dégradé par un générateur de radicaux libres, le facteur de dégradation A étant de 1,5 à 10, ledit facteur A étant défini comme étant le rapport MFI_{g}/MFIᵢ dans lequel MFI_{g} est l'indice de fluidité en fondu du produit dégradé et est compris entre 3 et 30 g/10 min et MFIᵢ est l'indice de fluidité en fondu du copolymère initial et est compris entre 2 et 15 g/10 min.

7. Procédé pour la fabrication de corps creux biorientés selon les revendications 5 et 6, dans lequel le terpolymère statistique du propylène contient de 1,5 à 3 % en poids d'unités monomériques dérivées de l'éthylène et de 5 à 8 % en poids d'unités monomériques dérivées du 1-butène.

8. Procédé pour la fabrication de corps creux biorientés selon l'une quelconque des revendications 5 à 7, dans lequel le terpolymère statistique du propylène mis en oeuvre présente un indice de fluidité en fondu initial MFIᵢ s'élevant de 2,5 à 7 g/10 min et un indice de fluidité en fondu après dégradation MFI_{g} s'élevant de 5 à 20 g/10 min.

9. Procédé pour la fabrication de corps creux biorientés selon l^{'}une quelconque des revendications 5 à 8, dans lequel le terpolymère statistique du propylène dégradé présente une distribution des masses moléculaires (Mw/Mn) comprise entre 3 et 8.

10. Utilisation des corps creux biorientés selon l'une quelconque des revendications 1 à 4 pour l'emballage des détergents, cosmétiques, médicaments et produits alimentaires.
